# EUROPEAN PATENT APPLICATION

(11) **EP 4 596 632 A1**
(43) Date of publication of application: **06.08.2025**
(21) Application number: 23871795.3
(22) Date of filing: 07.09.2023
(51) Int. Cl.: C08L 83/07, C08J 3/20, C08K 3/28, C08K 3/36, C08K 5/14, C08K 5/17, C08K 5/5419, C08K 5/5445, C08K 9/06, C08L 83/05

(54) **MILLABLE SILICONE RUBBER COMPOUND, MILLABLE SILICONE RUBBER COMPOSITION, AND PRODUCTION METHOD FOR MILLABLE SILICONE RUBBER COMPOSITION**

(30) Priority: 27.09.2022 JP 2022153490
(71) Applicant: SHIN-ETSU CHEMICAL CO., LTD., Tokyo 1000005 (JP)
(72) Inventor: ARAKI Tadashi, Annaka-shi, Gunma 379-0224 (JP)
(74) Representative: Röthinger, Rainer
(86) International application number: PCT/JP2023/032612
(87) International publication number: WO 2024/070556

(57) **Abstract**

The present invention provides: a millable silicone rubber compound including: (A) organopolysiloxane raw rubber; (B) reinforcing silica having a specific surface area of 50 to 450 m²/g; (C) a partial hydrolysate of organoalkoxysilane represented by the following general formula (1); and (D) one or more kinds of condensation reaction catalysts selected from the following (D1) to (D3): (D1) an amine compound having a boiling point of 30 to 60°C at 1013 hPa, the amine compound being in a liquid state at 25°C, (D2) hexaorganodisilazane represented by the following general formula (2), and (D3) ammonia water at 1.0 to 30.0 mass%. Thus, the present invention provides: a millable silicone rubber compound that enable to achieve high plasticity regardless of relatively low hardness of the millable silicone rubber compound, a millable silicone rubber composition, and a method for producing a millable silicone rubber composition.

RSi(OR¹)₃ (1)

R²₃SiNHSiR²₃ (2)

## Description

### TECHNICAL FIELD

The present invention relates to a millable silicone rubber compound, a millable silicone rubber composition, and a method for producing a millable silicone rubber composition.

### BACKGROUND ART

Silicone rubber has excellent properties such as weather resistance, electrical properties, low compression set, heat resistance, and cold resistance, and is widely used in various fields such as electrical equipment, automobiles, construction, medical treatment, and food. There is a growing need for silicone rubber, and development of silicone rubber with the further improved properties is desired. Such silicone rubber is generally provided for use as a millable silicone rubber compound containing organopolysiloxane raw rubber having a high degree of polymerization and a reinforcing filler, and a millable silicone rubber composition obtained by combining this compound with a curing agent. These millable silicone rubber compound and silicone rubber composition are produced by, for example, using a kneading machine such as a kneader and a twin-roll mill to mix a reinforcing filler and various dispersants with a raw material polymer.

In order to produce a millable silicone rubber compound, it is necessary to knead a reinforcing filler such as fumed silica into organopolysiloxane as described above. In this event, a surface treatment agent for the reinforcing filler, called a dispersant (wetter), is used. Generally, upon dispersion of the reinforcing filler such as silica in the organopolysiloxane, organosilane or siloxane containing a silanol group is used as the surface treatment agent. When an amount of the surface treatment agent is too large, plasticity of the silicone rubber compound is decreased and accordingly plasticity of the silicone rubber composition is also decreased. The use of such composition has caused a problem, for example, depending on a molding method such as extrusion molding, that an uncured molded article cannot withstand its own weight, resulting in a deformed and defective product. Additionally, there has also been a disadvantage that stickiness is caused on a surface of the silicone rubber composition, deteriorating processability. Conversely, there has been a problem that the insufficient addition amount of the surface treatment agent increases plasticity but causes large crepe hardening, called reverse plasticization.

To solve the above problems, Patent Document 1 has disclosed addition of a resin. Furthermore, Patent Document 2 has disclosed that plasticity can be increased by adding a polycyclic aromatic compound having two or more phenyl groups. However, none of them mention the problem of reverse plasticization, and the additives are expensive. Furthermore, Patent Document 3 has disclosed that reverse plasticization can be reduced by heating a silicone rubber compound at 200 to 250°C for 4 to 12 hours, but it is not economical. Patent Document 4 has reported that plasticity is increased by adding a condensation reaction catalyst of an organic metal compound selected from an organic titanium compound, an organic zirconium compound, and an organic aluminum compound, and performing heat treatment for condensation of silanol. This method is definitely effective for increasing the plasticity, but it is difficult to stably obtain preferable plasticity of a silicone rubber compound.

### CITATION LIST

### PATENT LITERATURE

Patent Document 1: JP H06-256658 A
Patent Document 2: JP H05-065415 A
Patent Document 3: JP H07-133356 A
Patent Document 4: JP 2014-109014 A

### SUMMARY OF INVENTION

### TECHNICAL PROBLEM

In view of the above circumstances, the present invention aims to provide a millable silicone rubber compound that enable to achieve high plasticity regardless of relatively low hardness of the millable silicone rubber compound, a millable silicone rubber composition, and a method for producing a millable silicone rubber composition.

### SOLUTION TO PROBLEM

To achieve the above object, the present invention provides a millable silicone rubber compound, including:
(A) 100 parts by mass of organopolysiloxane raw rubber containing two or more alkenyl groups each bonded to a silicon atom in one molecule, the organopolysiloxane raw rubber having an average degree of polymerization of 1,000 to 100,000;
(B) 5 to 100 parts by mass of reinforcing silica having a specific surface area of 50 to 450 m²/g as measured by BET adsorption method;
(C) 0.1 to 20 parts by mass of a partial hydrolysate of organoalkoxysilane represented by the following general formula (1),

   RSi(OR¹)₃ (1)

   in the formula (1), R represents a monovalent hydrocarbon group having 1 to 12 carbon atoms; and R¹ represents an alkyl group having 1 to 4 carbon atoms; and
(D) one or more kinds of condensation reaction catalysts selected from the following (D1) to (D3),
(D1) 0.0001 to 0.1 parts by mass of an amine compound having a boiling point of 30 to 60°C at 1013 hPa, the amine compound being in a liquid state at 25°C,
(D2) 0.001 to 1 parts by mass of hexaorganodisilazane represented by the following general formula (2),

   R²₃SiNHSiR²₃ (2)

   in the formula (2), R² independently represents an alkyl group having 1 to 12 carbon atoms, and
(D3) 0.001 to 1 parts by mass of ammonia water at 1.0 to 30.0 mass%.

According to such millable silicone rubber compound, even a millable silicone rubber compound having relatively low hardness can have high plasticity.

Further in the present invention, preferably, the R and the R¹ in the formula (1) independently represent any of a methyl group, an ethyl group, and a propyl group.

With such millable silicone rubber compound, the present invention can be more effective.

Furthermore, the present invention provides a millable silicone rubber composition including: a kneaded material obtained by kneading the above-described millable silicone rubber compound; and (E) a curing agent.

According to such millable silicone rubber composition, even a millable silicone rubber compound having relatively low hardness can yield a millable silicone rubber composition having high plasticity.

In this case, the component (E) is preferably a curing agent for hydrosilylation reaction consisting of a combination of organohydrogenpolysiloxane and a hydrosilylation catalyst.

Such component (E) is suitable because the kneaded material of the millable silicone rubber compound of the present invention contains less impurities acting as an addition curing inhibitor.

Further in this case, the component (E) may be organic peroxide.

In the millable silicone rubber composition of the present invention, such curing agent can also be used.

Furthermore, the present invention provides a method for producing a millable silicone rubber composition, including kneading the above-described millable silicone rubber compound, performing surface treatment of the component (B) with the component (C) in the presence of the component (D) as a catalyst while removing the component (D) by heat generated by stirring, and thereafter adding (E) a curing agent.

With such method for producing a millable silicone rubber composition, it is possible to produce a millable silicone rubber composition having high plasticity regardless of relatively low hardness of a millable silicone rubber compound.

In this case, as the component (E), a curing agent for hydrosilylation reaction consisting of a combination of organohydrogenpolysiloxane and a hydrosilylation catalyst, or organic peroxide is preferably used.

Such curing agent can be used for the method for producing a millable silicone rubber composition of the present invention.

### ADVANTAGEOUS EFFECTS OF INVENTION

With the method of the present invention, it is possible to provide a millable silicone rubber compound that enable to achieve high plasticity regardless of relatively low hardness of the millable silicone rubber compound, a millable silicone rubber composition, and a method for producing a millable silicone rubber composition.

### DESCRIPTION OF EMBODIMENTS

As described above, it has been demanded to develop a millable silicone rubber compound that enable to achieve high plasticity regardless of relatively low hardness of the millable silicone rubber compound, a millable silicone rubber composition, and a method for producing a millable silicone rubber composition.

As a result of an intensive investigation on the above problem, the present inventors have found that the above problem can be solved by a millable silicone rubber compound including (A) a particular organopolysiloxane raw rubber, (B) a reinforcing silica having a particular specific surface area, (C) partial hydrolysate of organoalkoxysilane having a particular structure, and (D) a particular condensation reaction catalyst, and completed the present invention.

Thus, the present invention is a millable silicone rubber compound, including:
(A) 100 parts by mass of organopolysiloxane raw rubber containing two or more alkenyl groups each bonded to a silicon atom in one molecule, the organopolysiloxane raw rubber having an average degree of polymerization of 1,000 to 100,000;
(B) 5 to 100 parts by mass of reinforcing silica having a specific surface area of 50 to 450 m²/g as measured by BET adsorption method;
(C) 0.1 to 20 parts by mass of a partial hydrolysate of organoalkoxysilane represented by the following general formula (1),

   RSi(OR¹)₃ (1)

   in the formula (1), R represents a monovalent hydrocarbon group having 1 to 12 carbon atoms; and R¹ represents an alkyl group having 1 to 4 carbon atoms; and
(D) one or more kinds of condensation reaction catalysts selected from the following (D1) to (D3),
(D1) 0.0001 to 0.1 parts by mass of an amine compound having a boiling point of 30 to 60°C at 1013 hPa, the amine compound being in a liquid state at 25°C,
(D2) 0.001 to 1 parts by mass of hexaorganodisilazane represented by the following general formula (2),

   R²₃SiNHSiR²₃ (2)

   in the formula (2), R² independently represents an alkyl group having 1 to 12 carbon atoms, and
(D3) 0.001 to 1 parts by mass of ammonia water at 1.0 to 30.0 mass%.

Hereinafter, the present invention will be described in detail. However, the present invention is not limited thereto.

### Millable Silicone Rubber Compound

A millable silicone rubber compound of the present invention includes:
(A) 100 parts by mass of organopolysiloxane raw rubber containing two or more alkenyl groups each bonded to a silicon atom in one molecule, the organopolysiloxane raw rubber having an average degree of polymerization of 1,000 to 100,000;
(B) 5 to 100 parts by mass of reinforcing silica having a specific surface area of 50 to 450 m²/g as measured by BET adsorption method;
(C) 0.1 to 20 parts by mass of a partial hydrolysate of organoalkoxysilane represented by the following general formula (1),

   RSi(OR¹)₃ (1)

   in the formula (1), R represents a monovalent hydrocarbon group having 1 to 12 carbon atoms; and R¹ represents an alkyl group having 1 to 4 carbon atoms; and
(D) one or more kinds of condensation reaction catalysts selected from the following (D1) to (D3),
(D1) 0.0001 to 0.1 parts by mass of an amine compound having a boiling point of 30 to 60°C at 1013 hPa, the amine compound being in a liquid state at 25°C,
(D2) 0.001 to 1 parts by mass of hexaorganodisilazane represented by the following general formula (2),

   R²₃SiNHSiR²₃ (2)

   in the formula (2), R² independently represents an alkyl group having 1 to 12 carbon atoms, and
(D3) 0.001 to 1 parts by mass of ammonia water at 1.0 to 30.0 mass%.

Hereinafter, each component will be described in detail.

### -Component (A)-

In the present invention, the component (A) is organopolysiloxane raw rubber that contains two or more alkenyl groups each bonded to a silicon atom in one molecule and has an average degree of polymerization of 1,000 to 100,000.

As the above alkenyl groups, an alkenyl group having 2 to 8 carbon atoms is preferred, and an alkenyl group having 2 to 6 carbon atoms is more preferred. Specific examples thereof include a vinyl group, an allyl group, a butenyl group, a pentenyl group, a hexenyl group, a cyclohexenyl group, and the like. Among them, a vinyl group is preferred.

Substituents other than the above alkenyl groups include monovalent hydrocarbon groups having 1 to 12 carbon atoms, particularly 1 to 8 carbon atoms. Specific examples thereof include: alkyl groups such as a methyl group, an ethyl group, a propyl group, a butyl group, a hexyl group, and an octyl group; cycloalkyl groups such as a cyclopentyl group and a cyclohexyl group; aryl groups such as a phenyl group and a tolyl group; aralkyl groups such as a benzyl group and a 2-phenylethyl group; and the like. Note that a fluoroalkyl group, that is, an alkyl group, part of which is substituted with a fluorine atom, may be used. Among them, a methyl group or a phenyl group is preferred, and a methyl group is particularly preferred.

Additionally, the component (A) is characterized by containing the two or more alkenyl groups each bonded to the silicon atom in one molecule. The component (A) contains preferably 2 to 50, more preferably 2 to 20 alkenyl groups. Among them, the component (A) containing vinyl groups is particularly preferred. In this case, 0.01 to 20 mol%, particularly 0.02 to 10 mol% of all siloxane units in the organopolysiloxane is preferably a siloxane unit containing an alkenyl group. Note that this alkenyl group may be bonded to the silicon atom at a molecular chain end, or may be bonded to the silicon atom in the middle of the molecular chain (not the end of the molecular chain), or may be both, but preferably it is bonded to at least the silicon atom at the end of the molecular chain.

Additionally, 80 mol% or more, preferably 90 mol% or more, and more preferably 95 mol% or more of all the siloxane units of the organopolysiloxane, and further preferably all the siloxane units except for the siloxane unit containing the alkenyl group are preferably dialkylsiloxy groups, particularly dimethylsiloxy groups.

The organopolysiloxane as the component (A) preferably has a linear molecular structure or a partially branched linear molecular structure. Specifically, suitable is a structure in which a repeating structure of a diorganosiloxane unit constituting a main chain of the organopolysiloxane is composed of the repetition of only a dimethylsiloxane unit, or a structure in which, as a part of this structure, a diorganosiloxane unit such as a diphenylsiloxane unit, a methylphenylsiloxane unit, a methylvinylsiloxane unit, and a methyl-3,3,3-trifluoropropylsiloxane unit is introduced, etc.

Additionally, the both ends of the molecular chain are preferably blocked, for example, with a group selected from a trimethylsiloxy group, a dimethylphenylsiloxy group, a vinyldimethylsiloxy group, a divinylmethylsiloxy group, a trivinylsiloxy group, and the like, and particularly preferably blocked with a vinyldimethylsiloxy group.

Examples of the organopolysiloxane as the component (A) include methylvinylpolysiloxane, methylphenylvinylpolysiloxane, methyltrifluoropropylvinylpolysiloxane, and the like.

Such organopolysiloxane can be obtained, for example, by (co-)hydrolysis condensation of one or two or more kinds of organohalogenosilane, or ring-opening polymerization of cyclic polysiloxane (a trimer or tetramer of siloxane, etc.) using an alkaline or acidic catalyst.

Note that the organopolysiloxane has an average degree of polymerization of 1,000 to 100,000, preferably 2,000 to 50,000, more preferably 2,500 to 30,000, and particularly preferably 3,000 to 20,000. Additionally, this organopolysiloxane is in a so-called raw rubber (non-liquid) state with no self-flowability at room temperature (25°C). If the average degree of polymerization is too small, the produced compound will have problems such as adhesion to a roller, resulting in deteriorated workability of the roller. If the average degree of polymerization is too large, there is a possibility of poor dispersion of the reinforcing silica, longer kneading time, or in the worst case scenario, failure to obtain the intended compound, during producing the compound. Note that the degree of polymerization can be measured as a weight-average degree of polymerization in terms of polystyrene determined by gel permeation chromatography (GPC) analysis.

The component (A) may be used alone or may be a mixture of two kinds or three or more kinds each having a different molecular weight (degree of polymerization) or molecular structure.

### -Component (B)-

The reinforcing silica as the component (B) is an additive that is added to obtain a millable silicone rubber composition excellent in mechanical strength. For this purpose, a specific surface area (BET adsorption method) is required to be 50 to 450 m²/g, preferably 100 to 450 m²/g, and more preferably 100 to 300 m²/g. The specific surface area of less than 50 m²/g is not preferable because mechanical strength of a cured material will be decreased. Additionally, if the specific surface area exceeds 450 m²/g, there is a possibility of poor dispersion of the reinforcing silica, longer kneading time, or in the worst case scenario, failure to obtain the intended compound, during producing the compound. Furthermore, if the reinforcing silica having the specific surface area of more than 450 m²/g is used, a cured material will be extremely hard, leading to a high possibility of poor flexibility.

Examples of such reinforcing silica include aerosol silica (fumed silica), precipitated silica (wet silica), and the like. Additionally, these are also suitably used after subjected to hydrophobic treatment with chlorosilane, hexamethyldisilazane, or the like. Among them, aerosol silica excellent in a dynamic fatigue **property** is preferred.

The component (B) may be used alone or in combination of two or more.

The reinforcing silica as the component (B) is blended in an amount of 5 to 100 parts by mass, preferably 10 to 50 parts by mass relative to 100 parts by mass of the organopolysiloxane raw rubber as the component (A). If the blending amount of the component (B) is too little, a reinforcing effect cannot be obtained. If the blending amount is too large, processability will be deteriorated and mechanical strength will also be decreased, resulting in deteriorated dynamic fatigue durability.

### -Component (C)-

In the present invention, a partial hydrolysate of organoalkoxysilane represented by the following formula (1) is used as the component (C). This component (C) is an essential component acting as a surface treatment agent that reacts with a hydroxy group (hydroxysilyl group) present on a surface of the above-described component (B) to quickly and uniformly disperse the component (B) into the component (A).

RSi(OR¹)₃ (1)

In the formula (1), R represents a monovalent hydrocarbon group having 1 to 12 carbon atoms; and R¹ represents an alkyl group having 1 to 4 carbon atoms.

Preferably, the R and the R¹ in the formula (1) independently represent any of a methyl group, an ethyl group, and a propyl group.

Specific examples of the organoalkoxysilane include trimethoxy(methyl)silane, trimethoxy(ethyl)silane, trimethoxy(propyl)silane, trimethoxy(butyl)silane, trimethoxy(hexyl)silane, triethoxy(methyl)silane, tripropoxy(methyl)silane, tributoxy(methyl)silane, and the like. Among them, trimethoxy(methyl)silane, trimethoxy(ethyl)silane, or triethoxy(methyl)silane is preferred, and trimethoxy(methyl)silane is more preferred. The partial hydrolysate of such organoalkoxysilane is used as the component (C). Note that since the component (C) is a partial hydrolysate, some hydroxy groups (hydroxysilyl groups) also exist, in addition to the monovalent hydrocarbon group derived from the above R and the alkoxy group derived from the above OR¹.

Here, the partial hydrolysate of organoalkoxysilane as the component (C) preferably has a degree of polymerization of 2 or more and 100 or less, among which the partial hydrolysate having the degree of polymerization of 2 to 30 is particularly preferably contained as a main component. If a monomer, not the partial hydrolysate, is used as the component (C), it will easily volatilize and thus dissipate during kneading, resulting in unstable plasticity of the silicone rubber compound to be obtained. Additionally, increase in an amount of a volatile component will pose industrial hazards, such as inhalation of volatilized vapor and ignition. When the degree of polymerization of the component (C) is 100 or less, viscosity of the component (C) does not increase so that it becomes easier to blend the component (C) or surface treatment capacity of the component (B) is enhanced. Therefore, it contributes to reducing blending time and stabilizing the plasticity of the silicone rubber compound to be obtained.

Additionally, a kinematic viscosity of the component (C) at 25°C is preferably in a range of 1.0 to 1,000 mm²/s, more preferably in a range of 1.5 to 500 mm²/s, and particularly preferably in a range of 1.5 to 300 mm²/s. Note that this kinematic viscosity refers to a value measured by a method described in JIS Z 8803:2011 using a Cannon-Feske viscometer. The value within this range is preferable because blending with other components becomes easier and volatile components can also be inhibited.

Note that the partial hydrolysate of organoalkoxysilane as the component (C) is added in an amount within a range of 0.1 to 20 parts by mass, preferably 0.5 to 10.0 parts by mass relative to 100 parts by mass of the component (A). If the addition amount of the component (C) is less than 0.1 parts by mass, reverse plasticization occurs to subsequently cause a defect in processability, or in the worst case scenario, the intended compound cannot be obtained. Additionally, if the addition amount of the component (C) exceeds 20 parts by mass, there is also a risk that the obtained compound becomes sticky, leading to poor subsequent processability or decreased mechanical properties of silicone rubber obtained by curing this compound.

### -Component (D)-

The component (D) is a condensation reaction catalyst. It is for condensation reaction between the hydroxysilyl group present on the surface of the reinforcing silica as the component (B) and a hydroxysilyl group in the component (C).

Note that the component (D) uses one or more kinds of condensation reaction catalysts selected from the following (D1) to (D3).

The component (D1) is an amine compound having a boiling point of 30 to 60°C at 1013 hPa. The amine compound is in a liquid state at 25°C. Specific examples of the component (D1) include: lower alkyl amines such as propylamine (melting point: -83°C, boiling point: 49°C), isopropylamine (melting point: - 101°C, boiling point: 33°C), and tert-butylamine (melting point: -72.65°C, boiling point: 46°C); lower dialkylamines such as diethylamine (melting point: - 50°C, boiling point: 56°C); and the like. Note that the above-described melting points and boiling points are temperatures described in SDS issued by FUJIFILM Wako Pure Chemical Corporation.

The component (D1) is added in an amount of 0.0001 to 0.1 parts by mass, preferably 0.001 to 0.05 parts by mass relative to 100 parts by mass of the component (A). If too small amount of the component (D1) is used, there is a possibility that the surface treatment of the reinforcing silica takes longer time, or a kneaded material of the millable silicone rubber compound cannot be obtained because of the decreased extent of surface treatment. Conversely, if too much amount of the component (D1) is used, there is a risk that the component (D1) cannot be removed from the kneaded material of the millable silicone rubber compound, leading to increase in plasticity over time. Furthermore, in a case of trying to obtain a cured material of silicone rubber by addition curing using a platinum catalyst, there is a possibility that physical properties of the cured material are not stabilized, or a surface of the cured material becomes tacky (sticky) due to insufficient curing.

The component (D2) is hexaorganodisilazane represented by the following general formula (2).

R²₃SiNHSiR²₃ (2)

In the formula (2), R² independently represents an alkyl group having 1 to 12 carbon atoms.

In the above formula (2), R² can be the same as R in the component (A). Particularly, R² is preferably an alkyl group having 1 to 6 carbon atoms, such as a methyl group and an ethyl group. Additionally, the molecule thereof may contain an alkenyl group such as a vinyl group.

Specific examples of the component (D2) include hexamethyldisilazane, 1-vinylpentamethyldisilazane, 1,3-divinyl-1,1,3,3-tetramethyldisilazane, 1,3-dimethyl-1,1,3,3-tetravinyldisilazane, and the like. Hexamethyldisilazane or 1,3-divinyl-1,1,3,3-tetramethyldisilazane is preferred, and hexamethyldisilazane is more preferred.

The component (D2) is blended in an amount of 0.001 to 1 parts by mass, preferably 0.01 to 0.50 parts by mass, and more preferably 0.01 to 0.3 parts by mass relative to 100 parts by mass of the component (A). If too small amount of the component (D2) is used, there is a possibility that the surface treatment of the reinforcing silica takes longer time, or the kneaded material of the millable silicone rubber compound cannot be obtained because of the decreased extent of surface treatment. Conversely, if too much amount of the component (D2) is used, there is a risk that the component (D2) cannot be removed from the kneaded material of the millable silicone rubber compound, leading to increase in plasticity over time. Furthermore, in a case of trying to obtain a cured material of silicone rubber by addition curing using a platinum catalyst, there is a possibility that physical properties of the cured material are not stabilized, or a surface of the cured material becomes tacky due to insufficient curing. Moreover, the excessive use is also economically unpreferable.

The component (D3) is ammonia water at 1.0 to 30.0 mass%. Usable ammonia water has a concentration of 1.0 to 30.0 mass%, preferably 10.0 to 28.0 mass%, and more preferably about 15.0 to 28.0 mass%.

The component (D3) is blended in an amount of 0.001 to 1 parts by mass, preferably 0.005 to 1 parts by mass, and more preferably 0.01 to 0.8 parts by mass relative to 100 parts by mass of the component (A). If too small amount of the component (D3) is used, there is a possibility that the surface treatment of the reinforcing silica takes longer time, or the kneaded material of the millable silicone rubber compound cannot be obtained because of the decreased extent of surface treatment. Conversely, if too much amount of the component (D3) is used, there is a risk that the component (D3) cannot be removed from the kneaded material of the millable silicone rubber compound, leading to increase in plasticity over time; and in a case of trying to obtain a cured material of silicone rubber by addition curing using a platinum catalyst, there is a possibility that physical properties of the cured material are not stabilized, or a surface of the cured material becomes tacky due to insufficient curing. Moreover, the excessive use is also economically unpreferable.

How to add the component (D) is not particularly limited. It is preferable to add the component (D) to the component (C), and then immediately add the same to a pot in which the component (B) is added. In this manner, the condensation reaction between the hydroxysilyl group in the component (B) and the hydroxysilyl group in the component (C) can efficiently proceed. Additionally, in order to make it easier to knead the component (D) by a twin-roll mill, a kneader, or the like, a paste of the component (D) prepared in advance by using organopolysiloxane or the like may be used.

The millable silicone rubber compound of the present invention is preferably produced by using an apparatus capable of uniformly kneading the predetermined amounts of the components (A) to (D) as described above. The apparatus capable of uniform kneading is not particularly limited, but the use of an apparatus in which heat is easily generated by stirring is preferred in consideration of reactivity of the component (D) and removal thereof after completion of the reaction. Specifically, the millable silicone rubber compound can be obtained by kneading using a kneader, a Banbury mixer, a roll mill, or the like, among which a kneader is particularly preferably used for production.

During mixing the components (A) to (D), the partial hydrolysate of organoalkoxysilane as the component (C) acts as a wetter for the reinforcing silica as the component (B). In order to promote the wetting efficiency thereof, addition of the condensation reaction catalyst as the component (D) is effective. In this event, in some cases, water as an optional component may be added to further facilitate the wetting. Due to addition of this component, in the partial hydrolysate of organoalkoxysilane as the component (C), the action as the wetter for the reinforcing silica as the component (B) promptly proceeds. In order to effectively treat the hydroxysilyl group present on the surface of the component (B), it is essential to contain, in the component (C), a reactive group that quickly reacts with the hydroxysilyl group. Accordingly, the partial hydrolysate of organoalkoxysilane that contains, in its molecule, many reactive groups to be reacted with the hydroxysilyl group and hardly causes three-dimensional crosslinking is effective.

Here, a temperature for mixing the components (A) to (D) is preferably in a range of 0 to 200°C, more preferably in a range of 10 to 180°C, and further preferably in a range of 20 to 170°C. Additionally, a mixing time of the components (A) to (D) is not particularly limited, but a desirable condition is preferably 1 to 300 minutes, more preferably 10 to 120 minutes in consideration of production efficiency.

By mixing the above-described components (A) to (D) in the above manner, heat is generated by stirring. An amount of the heat generated by stirring varies depending on the degree of polymerization of the component (A) to be used, the addition amount of the reinforcing silica as the component (B), and a ratio between the added components (A) and (B). Specifically, the composition suitable for the millable silicone rubber compound, that is, the composition similar to that of a conventional millable silicone rubber compound leads to generation of the heat by stirring at about 30°C to 120°C. Here, since the component (D) is in a liquid state during blending, it is excellent in handleability as well as reactivity between the components (B) and (C). Particularly, in the case of the component (D1), the boiling point at normal pressure, i.e. 1013 hPa, is 30 to 60°C, so that the component (D) can be removed from the millable silicone rubber compound only by the heat generated by stirring during blending. Additionally, in the case of adding and using the component (D2) or (D3), water or the like present in the system generates ammonia, that further facilitates the reaction between the components (B) and (C). This ammonia can be removed from the millable silicone rubber compound only by the heat generated by stirring during blending.

Accordingly, it is possible to supply the market with the millable silicone rubber compound similar to conventional ones while contributing to recent environmental issues, such as decarbonized society and reduction of CO₂ emission.

Furthermore, since the condensation reaction catalyst as the component (D) used in the present invention hardly remains in the kneaded material obtained by kneading the millable silicone rubber compound, there are no problems such as catalyst poison in the hydrosilylation reaction. Therefore, it can be suitably used even in a case of using an addition-reaction curing agent.

### Millable Silicone Rubber Composition

Furthermore, a millable silicone rubber composition of the present invention includes the kneaded material obtained by kneading the millable silicone rubber compound, and (E) a curing agent.

### -Component (E)-

The (E) curing agent is not particularly limited as long as it is capable of curing the component (A). Preferred is (E1) an addition-reaction (hydrosilylation reaction) curing agent generally known as a rubber hardener, **i.e.** a curing agent for hydrosilylation reaction consisting of a combination of organohydrogenpolysiloxane (crosslinking agent) and a hydrosilylation catalyst, or (E2) organic peroxide.

The organohydrogenpolysiloxane as the crosslinking agent for the (E1) addition-reaction curing agent contains two or more hydrosilyl groups in one molecule. Particularly preferred is organohydrogenpolysiloxane represented by the following formula (3).

**(R³₃SiO_{1/2})ₐ(R³₂SiO_{2/2})_{b}(R³SiO_{3/2})_{c}(SiO_{4/2})_{d}** (3)

In the formula (3), R³ independently represents a hydrogen atom or a group selected from an alkyl group having 1 to 8 carbon atoms, an aryl group having 6 to 10 carbon atoms, and an aralkyl group having 7 to 10 carbon atoms, where two or more R³s in one molecule are hydrogen atoms, however two or more hydrogen atoms never exist on the same silicon atom; "a" represents an integer satisfying 2≤a≤30; "b" represents an integer satisfying 0≤b≤300; "c" represents an integer satisfying 0≤c≤10; "d" represents an integer satisfying 0≤d≤30; and it should be noted that bonding between each siloxane unit may be block or random.

Here, R³ independently represents a hydrogen atom or a group selected from an alkyl group having 1 to 8 carbon atoms, preferably 1 to 6 carbon atoms, an aryl group having 6 to 10 carbon atoms, preferably 6 to 8 carbon atoms, and an aralkyl group having 7 to 10 carbon atoms, preferably 7 to 9 carbon atoms. However, two or more, preferably 2 to 200, and more preferably 2 to 130 R³s in one molecule are hydrogen atoms. Note that two or more hydrogen atoms never exist on the same silicon atom. Examples of the alkyl group include: alkyl groups such as a methyl group, an ethyl group, a propyl group, an isopropyl group, a butyl group, an isobutyl group, a tert-butyl group, a pentyl group, and a hexyl group; and cycloalkyl groups such as a cyclohexyl group. Examples of the aryl group include a phenyl group, a tolyl group, and the like. Examples of the aralkyl group include a benzyl group, a 2-phenylpropyl group, and the like. Note that a fluoroalkyl group, that is, an alkyl group, part of which is substituted with a fluorine atom, may be used. Furthermore, "a" represents an integer satisfying 2≤a≤30, preferably 2≤a≤20. "b" represents an integer satisfying 0≤b≤300, preferably 3≤b≤200. "c" represents an integer satisfying 0≤c≤10, preferably 0≤c≤5. "d" represents an integer satisfying 0≤d≤30, preferably 0≤d≤20.

Additionally, a molecular structure of the organohydrogenpolysiloxane may be any of linear, cyclic, branched, and three-dimensional network structures. In this case, suitable for use is the one in a liquid state at 25°C, where the number of silicon atoms in one molecule (or a degree of polymerization) is 2 to 300, particularly about 4 to 200. Note that the hydrosilyl groups may be at the end of the molecular chain or the side chain (in the middle of the molecular chain), or may be at the both.

Examples of this organohydrogenpolysiloxane include 1,1,3,3-tetramethyldisiloxane, 1,3,5,7-tetramethylcyclotetrasiloxane, methylhydrogencyclopolysiloxane, methylhydrogensiloxane-dimethylsiloxane cyclic copolymer, tris(dimethylhydrogensiloxy)methylsilane, tris(dimethylhydrogensiloxy)phenylsilane, methylhydrogenpolysiloxane blocked at both ends with trimethylsiloxy groups, dimethylsiloxane-methylhydrogensiloxane copolymer blocked at both ends with trimethylsiloxy groups, dimethylpolysiloxane blocked at both ends with dimethylhydrogensiloxy groups, dimethylsiloxane-methylhydrogensiloxane copolymer blocked at both ends with dimethylhydrogensiloxy groups, methylhydrogensiloxane-diphenylsiloxane copolymer blocked at both ends with trimethylsiloxy groups, methylhydrogensiloxane-diphenylsiloxane-dimethylsiloxane copolymer blocked at both ends with trimethylsiloxy groups, cyclic methylhydrogenpolysiloxane, cyclic methylhydrogensiloxane-dimethylsiloxane copolymer, cyclic methylhydrogensiloxane-diphenylsiloxane-dimethylsiloxane copolymer, copolymer composed of a (CH₃)₂HSiO_{1/2} unit and a SiO_{4/2} unit, copolymer composed of a (CH₃)₂HSiO_{1/2} unit, a SiO_{4/2} unit, and a (C₆H₅)SiO_{3/2} unit, those obtained by substituting some or all of methyl groups in the above respective exemplified compounds with other alkyl groups such as ethyl group and propyl group or aryl groups such as phenyl group, and the like. Additionally, specific examples of such organohydrogenpolysiloxane include compounds of the following structural formulae.

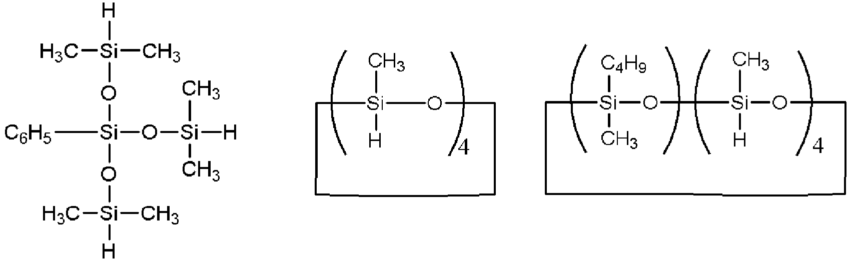

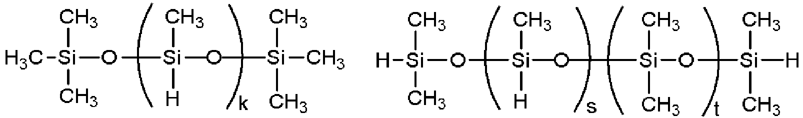

In the formulae, "k" represents an integer of 2 to 10; and "s" and "t" each represents an integer of 0 to 10.

This organohydrogenpolysiloxane preferably has a viscosity at 25°C of 0.5 to 10,000 mPa·s, particularly 1 to 300 mPa·s. Note that the viscosity refers to a value measured by a method using a rotational viscometer described in JIS K 7117-1:1999.

Additionally, this organohydrogenpolysiloxane is preferably blended in an amount such that a mole ratio of the hydrogen atom bonded to the silicon atom (i.e. hydrosilyl group) in the organohydrogenpolysiloxane to the alkenyl group bonded to the silicon atom in the component (A) (hydrosilyl group/alkenyl group) will be 0.5 to 10, preferably 0.8 to 6, and more preferably 1 to 5. The ratio of 0.5 or more enables to achieve sufficient crosslinking and thus sufficient mechanical strength. The ratio of 10 or less does not cause decreased physical properties after curing, and particularly, causes no deterioration in heat resistance and compression set resistance.

Additionally, the hydrosilylation catalyst used in the (E1) addition-reaction curing agent is a catalyst that facilitates addition reaction between the alkenyl groups in the component (A) and the hydrosilyl groups in the organohydrogenpolysiloxane as the crosslinking agent. Examples of the hydrosilylation catalyst include platinum group metal catalysts such as ruthenium and platinum. The platinum group metal catalysts include platinum group metal simple substances and compounds thereof. As this catalyst, conventionally known catalysts for an addition-reaction curing silicone rubber composition can be used. Examples thereof include: fine particle platinum metal adsorbed on a carrier such as silica, alumina, or silica gel; platinic chloride, chloroplatinic acid, a reaction product of chloroplatinic acid with monohydric alcohol, a complex of chloroplatinic acid with olefin, a complex of chloroplatinic acid with a vinyl group-containing (poly)siloxane, a complex of chloroplatinic acid with phosphite and a complex thereof with a vinyl group-containing (poly)siloxane; a palladium catalyst, a rhodium catalyst, a ruthenium catalyst; and the like. Among them, platinum or a platinum compound is particularly preferred.

An addition amount of the hydrosilylation catalyst may be so-called catalyst quantity which enables to facilitate addition reaction. The hydrosilylation catalyst is typically used in an amount within a range of 1 ppm to 1 mass%, preferably 10 to 500 ppm in terms of platinum group metal mass based on the amount of the component (A). The addition amount of 1 ppm or more enables to sufficiently facilitate the addition reaction, leading to sufficient curing, whereas the addition amount of 1 mass% or less is economical.

Moreover, in addition to the above catalyst, an addition crosslinking regulator may be used for the purpose of controlling a curing rate. Specific examples thereof include ethynylcyclohexanol, tetramethyltetravinylcyclotetrasiloxane, and the like.

Meanwhile, examples of the (E2) organic peroxide include benzoyl peroxide, 2,4-dichlorobenzoyl peroxide, p-methylbenzoyl peroxide, o-methylbenzoyl peroxide, 2,4-dicumyl peroxide, 2,5-dimethyl-2,5-bis(t-butylperoxy)hexane, di-t-butyl peroxide, t-butyl perbenzoate, 1,6-hexanediol-bis-t-butylperoxy carbonate, and the like.

The organic peroxide is preferably added in an amount of 0.1 to 15 parts by mass, particularly preferably 0.2 to 10 parts by mass relative to 100 parts by mass of the component (A). When the addition amount is 0.1 parts by mass or more, crosslinking reaction sufficiently proceeds, causing no deterioration of physical properties such as reduced hardness, insufficient rubber strength, and increased compression set. Furthermore, the addition amount of 15 parts by mass or less is economically preferable, with the curing agent decomposed in a sufficiently small amount, no deterioration of physical properties such as increased compression set, nor increase in discoloration of a sheet to be obtained.

To the millable silicone rubber composition of the present invention, in addition to the above components, an electrical conductivity-imparting agent such as carbon black, a flame retardant such as iron oxide and a halogen compound, an antistatic agent, a softening agent, an antioxidant, an ultraviolet absorbing agent, a colorant, etc. can be added according to the object of the present invention.

By curing the millable silicone rubber composition of the present invention obtained in this manner at 60 to 300°C, particularly 80 to 200°C for 5 seconds to 1 hour, particularly for 30 seconds to 30 minutes, a silicone rubber cured material can be obtained.

### Method for Producing Millable Silicone Rubber Composition

The millable silicone rubber composition of the present invention can be obtained by kneading the above-described millable silicone rubber compound, performing surface treatment of the component (B) with the component (C) in the presence of the component (D) as a catalyst while removing the component (D) by the heat generated by stirring, and thereafter adding the (E) curing agent.

In this event, as the component (E), the curing agent for hydrosilylation reaction consisting of the combination of the organohydrogenpolysiloxane and the hydrosilylation catalyst, or the organic peroxide is preferably used.

### EXAMPLE

Hereinafter, the present invention will be specifically described with reference to Examples and Comparative Examples. However, the present invention is not limited to the following Examples. Incidentally, a melting point and a boiling point are values at 1013 hPa; an average degree of polymerization is measured as a weight-average degree of polymerization in terms of polystyrene determined by gel permeation chromatography (GPC) analysis; a viscosity is a value measured by a method using a rotational viscometer described in JIS K 7117-1:1999; a kinematic viscosity is a value measured by a method described in JIS Z 8803:2011 using a Cannon-Feske viscometer; and a refractive index is a value measured by a method described in JIS K 0062:1992 using an Abbe's refractometer.

Specific examples of the respective components used in Examples of the present invention and Comparative Examples are described below.

### (A) Organopolysiloxane Raw Rubber

Organopolysiloxane raw rubber composed of a dimethylsiloxane unit at 99.825 mol%, a methylvinylsiloxane unit at 0.15 mol%, and a dimethylvinylsiloxane unit at 0.025 mol%, containing 12 vinyl groups in one molecule on average, each bonded to a silicon atom, with an average degree of polymerization of 6, 000

### (B) Reinforcing Silica

(B-1) Fumed silica (product name: AEROSIL 200, produced by NIPPON AEROSIL CO., LTD.) having a specific surface area of 200 m²/g as determined by BET adsorption method
(B-2) Surface-treated silica (product name: AEROSIL R-972, produced by NIPPON AEROSIL CO., LTD.) having a specific surface area of 130 m²/g as determined by BET adsorption method

### (C) Partial Hydrolysate of Organoalkoxysilane

(C-1) Partial hydrolysate of trimethoxy(methyl)silane (product name: KC-89S, produced by Shin-Etsu Chemical Co., Ltd., kinematic viscosity [25°C]: 5 mm²/s, refractive index [25°C]: 1.394)
(C-2) Partial hydrolysate of trimethoxy(methyl)silane (product name: X-40-9225, produced by Shin-Etsu Chemical Co., Ltd., kinematic viscosity [25°C]: 100 mm²/s, refractive index [25°C]: 1.407)
(C-3) Trimethoxy(methyl)silane (product name: KBM-13, produced by Shin-Etsu Chemical Co., Ltd., kinematic viscosity [25°C]: 0.5 mm²/s) [for Comparative Example]
(C-4) Linear partial hydrolysate of tetramethoxysilane (product name: methyl silicate oligomer MKC Silicate MS-51, produced by Mitsubishi Chemical Corporation, kinematic viscosity [25°C]: 7 mm²/s) [for Comparative Example]

### (D) Condensation Reaction Catalyst

(D1) Amine compound in a liquid state at 25°C (low-boiling-point amine compound)
   Isopropylamine (melting point: -101°C, boiling point: 33°C)
(D2) Hexaorganodisilazane
   Hexamethyldisilazane (product name: SZ-31, produced by Shin-Etsu Chemical Co., Ltd.)
(D3) Ammonia water
   Ammonia water at 28 mass%

The above respective components were added in the amounts described in Table 1, and a kneaded material of a millable silicone rubber compound was obtained through the following processes.

### Production Processes of Kneaded Material of Millable Silicone Rubber Compound

In a 3 L kneader, the components (C) and (D) in the amounts described in Table 1 were added to 100 parts by mass of the component (A) and 40 parts by mass of the component (B), and uniformly kneaded. Thereafter, additional kneading was further performed at the temperature described in Table 1 for 2 hours, thereby obtaining the kneaded material of the millable silicone rubber compound. Note that in Table 1, "thermal mixing" refers to a method of external heating to a set temperature followed by mixing for a specified time, while "simple mixing" refers to mixing for a specified time with temperature rise from room temperature only by the heat generated by stirring but no external heating.

### ∘ Plasticity Measurement

The kneaded material of the millable silicone rubber compound each prepared in Examples 1 to 6 and Comparative Examples 1 to 2 was kneaded 15 times by a three-roll mill, and ten minutes later (initial period), Williams plasticity was measured by a method described in JIS K6249:2003. Next, the plasticity was respectively measured after one day at 40°C, and an amount of change in the plasticity after one day at 40°C from the initial period was calculated to evaluate the change over time. The value of the change over time within ±50 was determined as success (equal to or better than conventional ones), while the value deviated from this was determined as failure (worse than the conventional ones).

### ∘ Physical Properties Measurement

Relative to 100 parts by mass of the kneaded material of the millable silicone rubber compound each prepared in Examples 1 to 6 and Comparative Examples 1 to 2, 0.01 parts by mass of a platinum catalyst (produced by Shin-Etsu Chemical Co., Ltd.) containing a chloroplatinic acid-divinyldisiloxane complex at 1 mass% in terms of platinum atomic mass, and 0.85 parts by mass of organohydrogenpolysiloxane (produced by Shin-Etsu Chemical Co., Ltd.) represented by the following formula

**[(CH₃)₃SiO_{1/2}]₂[H(CH₃)SiO_{2/2}]₂₀[(CH₃)₂SiO_{2/2}]₁₈**

were added as the (E1) addition-reaction curing agent and uniformly mixed to prepare a millable silicone rubber composition. Thereafter, this composition was subjected to press curing at 120°C for 10 minutes and then postcuring at 200°C for 4 hours to form a test sheet. For the test sheet thus formed, hardness (durometer A), tensile strength, elongation at break, and compression set (150°C/22 hours, 25% compression) were measured based on the description in JIS K 6249:2003. Additionally, rebound resilience was measured by a method described in JIS K 6255:2013. Regarding these values, the elongation at break of 500% or less or the compression set exceeding 30% was determined as failure because of the poor physical properties.

**[Table 1]**

| | Blending amount (parts by mass) | | Ex.1 | Ex.2 | Ex.3 | Ex.4 | Ex.5 | Ex.6 | Comp. Ex. 1 | Comp. Ex.2 |
|---|---|---|---|---|---|---|---|---|---|---|
| Blending amount | (A)Organopolysiloxane | | 100 | 100 | 100 | 100 | 100 | 100 | 100 | 100 |
| | (B) Reinforcing silica | | AEROSIL | AEROSIL | AEROSIL | AEROSIL | AEROSIL | AEROSIL | AEROSIL | AEROSIL |
| | | | 200 | R-972 | R-972 | R-972 | R-972 | R-972 | 200 | 200 |
| | (C)Partial hydrolysate of organoalkoxysilane | | KC-89S | KC-89S | KC-89S | X-40-9225 | KC-89S | KC-89S | KBM-13 | MKC Silicate MS-51 |
| | | | 7.0 | 5.0 | 5.0 | | 5.0 | 5.0 | 7.0 | |
| | | | | | | 5.0 | | | | |
| | | | | | | | | | | 7.0 |
| | (D)Conden sation reaction catalyst | (D1) Low- boiling-point amine compound | | | Isopropyl amine 0.02 | | | | | |
| | | (D2) Hexaorgan odisilazane | SZ-31 | SZ-31 | | SZ-31 | SZ-31 | | SZ-31 | SZ-31 |
| | | | 0.1 | 0.02 | | 0.02 | 0.1 | | 0.1 | 0.1 |
| | | (D3) Ammonia water | | | | | | 28% ammonia water 0.1 | | |
| Blending conditions | Additional kneading conditions | | Thermal mixing | Simple mixing | Simple mixing | Simple mixing | Thermal mixing | Thermal mixing | Thermal mixing | Thermal mixing |
| | Additional kneading temperature | | 170°C | Final 75°C | Final 78°C | Final 71°C | 170°C | 170°C | 170°C | 170°C |
| Measurement results | | | | | | | | | | |
| Plasticity | Initial | | 312 | 243 | 260 | 294 | 266 | 274 | 369 | 563 |
| | After 40°C×24 hours Plasticity change (after 40°C×24 hours - initial value) | | 342 | 280 | 300 | 338 | 302 | 310 | 440 | 873 |
| | | | 30 | 37 | 40 | 44 | 36 | 36 | 71 | 310 |
| | Determination (success: within ±50) | | Success | Success | Success | Success | Success | Success | Failure | Failure |
| Physical properties of cured material | Density (g/cm³) | | 1.16 | 1.15 | 1.15 | 1.16 | 1.15 | 1.16 | 1.16 | 1.17 |
| | Hardness (Duro.A) | | 58 | 57 | 55 | 58 | 54 | 55 | 62 | 68 |
| | Elongation at break (%) | | 590 | 640 | 570 | 570 | 580 | 560 | 460 | 460 |
| | Tensile strength (MPa) | | 10.3 | 9.8 | 8.9 | 7.3 | 8.8 | 8.6 | 10.9 | 10.1 |
| | Rebound resilience (%) | | 57 | 56 | 60 | 54 | 56 | 55 | 62 | 57 |
| | | Compression set (%) | 24 | 26 | 23 | 22 | 18 | 19 | 31 | 45 |
| | | Determination (failure: elongation of 500% or less, compression set of 30% or more) | Success | Success | Success | Success | Success | Success | Failure | Failure |

### Evaluation Results

It can be seen that the respective millable silicone rubber compounds obtained in Examples 1 to 6 satisfy the requirements of the present invention, and the resulting physical properties of the kneaded material of each millable silicone rubber compound and the resulting physical properties of the molding test sheet of the millable silicone rubber composition formed by using the same satisfy the target values of the performance.

In contrast, in Comparative Example 1, the organoalkoxysilane as the component (C) has the same structure but is not a partial hydrolysate. As a result, the blended organoalkoxysilane volatilized during kneading or thermal mixing, leading to the decreased extent of surface treatment of the reinforcing silica as the component (B). The resulting initial plasticity and also the plasticity after 40°C×24 hours became high. Additionally, in the physical properties of the molding test sheet of the millable silicone rubber composition formed by using the kneaded material of the millable silicone rubber compound of Comparative Example 1, deterioration in the elongation at break and the compression set can be confirmed as compared with Examples 1 to 6. Accordingly, the results are deviated from the target values.

Moreover, in Comparative Example 2, the partial hydrolysate having a different structure of organoalkoxysilane as the component (C) was used. Since this partial hydrolysate is highly capable of three-dimensional crosslinking, the initial plasticity of the obtained kneaded material of the millable silicone rubber compound is extremely high, and further increase in the plasticity can be confirmed after 40°C×24 hours. In the kneaded material of the millable silicone rubber compound with such extremely high initial plasticity, kneading uniformity is also decreased. Accordingly, in the physical properties of the molding test sheet of the millable silicone rubber composition formed by using such kneaded material of the millable silicone rubber compound, deterioration in the elongation at break and the compression set can be confirmed as compared with Examples 1 to 6.

According to the above results, it has been confirmed that the millable silicone rubber compound of the present invention can yield the very stable kneaded material of the millable silicone rubber compound regardless of the kneading conditions, and physical properties of the millable silicone rubber composition formed by using the same also exhibit quite favorable performance.

### Industrial Applicability

The millable silicone rubber compound of the present invention, and the millable silicone rubber composition obtained by blending a curing agent with a kneaded material of the compound enable to provide a millable silicone rubber compound and a millable silicone rubber composition that can have high plasticity even though the millable silicone rubber compound has relatively low hardness. Accordingly, contribution especially to dimension stability of extrusion molding materials with low hardness, etc. can be achieved. Moreover, the millable silicone rubber composition using the kneaded material of this millable silicone rubber compound can be expected to be widely applied to electrical equipment, automobiles, construction, medical treatment, food, and other fields.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. A millable silicone rubber compound comprising:
(A) 100 parts by mass of organopolysiloxane raw rubber containing two or more alkenyl groups each bonded to a silicon atom in one molecule, the organopolysiloxane raw rubber having an average degree of polymerization of 1,000 to 100,000;
(B) 5 to 100 parts by mass of reinforcing silica having a specific surface area of 50 to 450 m²/g as measured by BET adsorption method;
(C) 0.1 to 20 parts by mass of a partial hydrolysate of organoalkoxysilane represented by the following general formula (1),
RSi(OR¹)₃ (1)
in the formula (1), R represents a monovalent hydrocarbon group having 1 to 12 carbon atoms; and R¹ represents an alkyl group having 1 to 4 carbon atoms; and
(D) one or more kinds of condensation reaction catalysts selected from the following (D1) to (D3),
(D1) 0.0001 to 0.1 parts by mass of an amine compound having a boiling point of 30 to 60°C at 1013 hPa, the amine compound being in a liquid state at 25°C,
(D2) 0.001 to 1 parts by mass of hexaorganodisilazane represented by the following general formula (2),
R²₃SiNHSiR²₃ (2)
in the formula (2), R² independently represents an alkyl group having 1 to 12 carbon atoms, and
(D3) 0.001 to 1 parts by mass of ammonia water at 1.0 to 30.0 mass%.

2. The millable silicone rubber compound according to claim 1, wherein the R and the R¹ in the formula (1) independently represent any of a methyl group, an ethyl group, and a propyl group.

3. A millable silicone rubber composition comprising: a kneaded material obtained by kneading the millable silicone rubber compound according to claim 1 or 2; and (E) a curing agent.

4. The millable silicone rubber composition according to claim 3, wherein the component (E) is a curing agent for hydrosilylation reaction consisting of a combination of organohydrogenpolysiloxane and a hydrosilylation catalyst.

5. The millable silicone rubber composition according to claim 3, wherein the component (E) is organic peroxide.

6. A method for producing a millable silicone rubber composition, comprising kneading the millable silicone rubber compound according to claim 1 or 2, performing surface treatment of the component (B) with the component (C) in the presence of the component (D) as a catalyst while removing the component (D) by heat generated by stirring, and thereafter adding (E) a curing agent.

7. The method for producing a millable silicone rubber composition according to claim 6, wherein as the component (E), a curing agent for hydrosilylation reaction consisting of a combination of organohydrogenpolysiloxane and a hydrosilylation catalyst, or organic peroxide is used.
